Europäisches Patentamt

(19) European Patent Office

Office européen des brevets

(11) Publication number: **0 306 169 B1**

(12) **EUROPEAN PATENT SPECIFICATION**

(45) Date of publication of patent specification :
03.07.91 Bulletin 91/27

(51) Int. Cl.⁵ : **F16H 45/02**

(21) Application number : **88307517.8**

(22) Date of filing : **12.08.88**

(54) Damping assembly for a torque converter and clutch assembly.

(30) Priority : **04.09.87 US 93198**

(43) Date of publication of application :
**08.03.89 Bulletin 89/10**

(45) Publication of the grant of the patent :
**03.07.91 Bulletin 91/27**

(84) Designated Contracting States :
**DE ES FR GB**

(56) References cited :
**GB-A- 2 112 117**
**GB-A- 2 117 849**
**US-A- 4 325 270**

(73) Proprietor : **GENERAL MOTORS CORPORATION**
**General Motors Building 3044 West Grand Boulevard**
**Detroit Michigan 48202 (US)**

(72) Inventor : **Dull, Dennis Clinton**
**26 Meadowlawn Drive**
**Arcanum Ohio 45304 (US)**

(74) Representative : **Denton, Michael John et al**
**Patent Section Vauxhall Motors Limited 1st Floor Gideon House 26 Chapel Street**
**Luton Bedfordshire LU1 2SE (GB)**

EP 0 306 169 B1

## Description

This invention relates to torsional dampers and more particularly to torsional dampers for torque converter and clutch assemblies, as, for example, disclosed in GB-A-2,117,849 and specified in the preamble of Claim 1.

Clutch dampers which reduce torsional vibrations brought about by engine torque spikes are well known. Dampers for torque converter clutches have generally been spring-type dampers. In these dampers, springs are utilized to permit relative motion between the input and output members of the clutch. The energy stored in the springs is either returned to the output when the torque spike decreases or partially given up to a friction damper in parallel with the springs.

A viscous clutch in series with a friction clutch has also been used. The viscous clutch does not pass the torque spikes or torsional vibrations, similar to a fluid coupling, so that the operator does not feel the torsional vibrations downstream of the torque converter when the viscous clutch is engaged.

Another device for reducing the input torsional vibrations to a transmission is a slipping clutch. The slipping clutch is utilized in the same space as a fully engaged torque converter clutch. The slipping clutch is controlled by apply and release pressures so that complete engagement is not reached. Because of the slipping interface between the engine output and the clutch input, the torsional vibrations are not transmitted to the clutch member.

It is an object of this invention to provide an improved torque converter and clutch assembly having a planetary gear set disposed between the turbine, the torque converter clutch and the output shaft whereby torque spikes imposed on the clutch are dampened by the planetary gear set and the turbine.

To this end, a torque converter and clutch assembly in accordance with the present invention is characterised by the features specified in the characterising portion of claim 1.

The present invention seeks to provide dampening of the torsional vibrations at the torque converter clutch input by permitting the torque converter to absorb the vibrations. With this arrangement the torque converter clutch can be fully engaged so that no slippage at the torque converter clutch interface will occur. The torque converter turbine and the torque converter clutch are connected to separate members of a planetary gear arrangement which also has a member connected with a torque converter output shaft. The torque spikes or torsional vibrations are effectively absorbed by the torque converter.

The planetary gear arrangement has two input members which are connected to the torque converter clutch and the turbine. These input members combine the power delivered by the engine and direct it through the planetary gear arrangement to the torque converter output shaft. When a torque spike is present at the torque converter clutch, the turbine effectively becomes a rotating reaction and will reduce in speed to absorb the instantaneous energy of the torque spike thereby preventing the torque spike from reaching the output shaft. Thus, no disturbance will be transmitted downstream of the torque converter clutch. The planetary gear arrangement can be sized to control the speed differential, during steady state, between the torque converter clutch and the turbine. Thus, the power transmitted is split between mechanical and hydraulic power paths.

The turbine and the output of the planetary gear arrangement are also coupled by a one-way clutch which prevents the turbine from overrunning the torque converter output shaft. When the torque converter clutch is disengaged, all the power is transmitted by the torque converter, through the one-way clutch to the torque converter output shaft. Generally the torque converter clutch is disengaged when the transmission is operating in the low forward ratio or in the reverse ratio.

The present invention also provides an improved turbine damped torque converter and clutch assembly wherein a planetary gear arrangement combines input power from a selectively engageable torque converter clutch and a turbine for delivery to an output member and also wherein a one-way clutch is drive connected between the turbine and the output member for delivering power to the output member when the torque converter clutch is disengaged and the turbine is attempting to rotate faster than the output member.

The present invention further provides an improved torque converter and clutch assembly wherein a planetary gear arrangement is disposed between the torque converter clutch, the turbine and the output member such that the turbine provides a reaction member for the engine torsional vibrations imposed on the torque converter clutch whereby turbine dampening occurs and the torsional vibrations are not transmitted downstream of the torque converter clutch to the output member.

The present invention still further provides an improved torque converter and clutch assembly wherein a planetary gear arrangement interconnects the torque converter clutch, turbine and torque converter output shaft such that the turbine is effective as a reaction element to absorb the energy of engine torsional vibrations imposed on the torque converter clutch and also wherein both the torque converter clutch and turbine deliver power to the torque converter output shaft and further wherein the planetary gear arrangement permits the turbine to rotate at a speed less than the torque converter clutch when both members are transmitting power to the output shaft.

The present invention will now be described, by way of example, with reference to the following description and the accompanying drawings, in which :

Figure 1 is a cross-sectional elevational view of a torque converter and clutch assembly incorporating the present invention and a schematic representation of a control system ; and

Figure 2 is a view taken along line 2-2 of Figure 1.

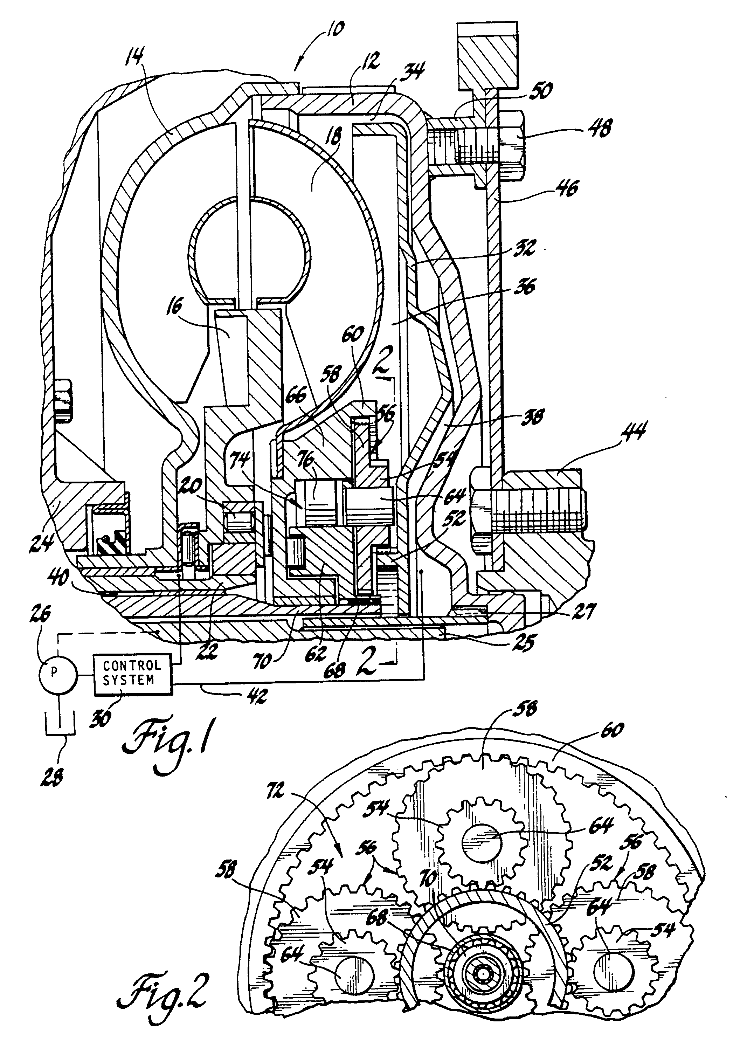

Referring to the drawings wherein like characters represent the same or corresponding parts throughout the views, there is seen in Figure 1 a torque converter and clutch assembly generally designated 10 which includes an input shell 12 welded to an impeller 14. The impeller 14 is in toroidal flow relation with a stator 16 and a turbine 18. The stator 16 is drivingly connected by way of a stator one-way brake 20 to a stator shaft 22 which is connected to a stationary portion of the transmission such as housing 24. The input shell 12 is drivingly connected to a shaft 25 by a spline connection 27.

The shaft 25 is drivingly connected to a conventional hydraulic pump 26. Since the input shell 12 is continuously driven by the engine, the hydraulic pump 26 will be continuously driven by the engine. The hydraulic pump 26 is effective to draw fluid from a reservoir 28 and deliver the fluid to a control system 30.

A torque converter clutch 32 is disposed in an envelope or space 34 formed between the turbine 18 and the input shell 12. The turbine 18 and torque converter clutch 32 cooperate to form an apply chamber 36 while the input shell 12 and torque converter clutch 32 cooperate to form a release chamber 38. The control system 30 is effective to regulate fluid pressures and to distribute fluid under pressure to the apply chamber 36 and to the release chamber 38 depending upon the transmission operating condition and various vehicle parameters. This type of control system is well known and has been utilized in commercial vehicles for a number of years. The control system 30 can be a reverse flow control. When it is desirable to engage the torque converter clutch 32, a passage 40 is pressurized such that fluid under pressure is directed to the apply chamber 36. The fluid pressure in passage 40 passes through the torque converter and into the apply chamber 36 to enforce engagement of the torque converter clutch 32. When it is desirable to have the torque converter clutch 32 disengaged, a passage 42 is pressurized such that fluid under pressure is directed to the release chamber 38. Fluid in the release chamber 38 passes through the friction interface between the torque converter clutch 32 and the input shell 12 and into the torque converter and clutch assembly 10. The fluid is utilized by the torque converter and clutch assembly 10 to transmit power from the impeller 14 to the turbine 18 in a well known manner. The basic construction of these elements, and torque converters in general, is well known. It is not considered that a more complete description of these elements is necessary at this point.

The input shell 12 is driven from an engine crankshaft 44 which is a component of an internal combustion engine (not shown). The drive connection between the engine crankshaft 44 and input shell 12 is by way of a conventional flex plate 46 and a plurality of fasteners 48 which secure lugs 50 of input shell 12 to the flex plate 46. This input drive mechanism is a well known structure and has been utilized in many previous transmissions.

The torque converter clutch 32 has formed thereon a sun gear 52 near its inner periphery. The sun gear 52 meshes with a pinion gear 54 which is a portion of a stepped pinion gear 56. A larger diameter pinion gear 58, also a portion of the stepped pinion gear 56, meshes with a ring gear 60. The stepped pinion gear 56 is rotatably mounted on a carrier 62 by a plurality of pinion pins 64. The ring gear 60 is secured to or otherwise formed integral with a hub 66 which is secured to the inner diameter of the turbine 18. The carrier 62 is drivingly connected, through a spline connection at 68, to a torque converter output shaft 70 which is drivingly connected to a conventional transmission not shown. The sun gear 52, ring gear 60, stepped pinion gears 56 and carrier 62 cooperate to form a planetary gear arrangement generally designated 72 and best seen in Figure 2. Whenever the torque converter clutch 32 is engaged with the input shell 12, the sun gear 52 will rotate at the speed of the engine. The turbine 18 will attempt to rotate at some speed less than the impeller 14 because of the fluid and power transmission losses, that occur in a torque converter. Since the turbine 18 is drivingly connected with the ring gear 60, the ring gear must travel at the same speed as the turbine. By selecting the diameter ratios between the sun gear 52 and ring gear 60 and pinion gears 54 and 58, the steady state rotary speed of the turbine 18 can be controlled. For example, if the ring gear 60 has a diameter of five (5) units and the pinion gear 58 has a diameter of two (2) units, a 2% slip speed will occur if the sun gear 52 has a diameter of 2.13 units and the pinion gear 54 has a diameter of 0.87 units. Should it be desirable to have a larger percent slip, for example say 7%, this can be achieved by providing the sun gear 52 with the diameter of 2.1 units while the pinion gear 54 is given a diameter of 0.9 units. Of course the exact diameters and slip ratio will be determined by the accepted gear design parameters and practice which are controlled and limited by the pitch diameter tooth size and other gear dimensions. These are selected to provide a properly sized planetary gear arrangement which will fit within the envelope given.

Assuming that the torque converter and clutch assembly 10 is operating at a steady state condition, that is the vehicle in which this torque converter is utilized is being driven on the road at a steady speed, the speed differential between the torque converter clutch 32 and turbine 18 is fixed. If a torsional vibration induced by engine roughness or a transient torque spike should be imposed upon the torque converter clutch 32, the torque converter clutch will try to accelerate. If acceleration of the torque converter clutch is permitted, the operator of course will feel the torsional vibration. To prevent the torsional vibration from being transmitted to the torque converter output shaft 70, the turbine 18 will reduce in speed thus providing a reaction member within the planetary gear arrangement 72. When the turbine 18 reduces in speed, the torque converter output shaft 70 will maintain a constant speed. Thus the torsional vibration is wholly absorbed within the torque converter and clutch assembly 10.

The hub 66 forms an outer race for a one-way clutch generally designated 74, which is comprised of a plurality of rollers 76 and the outer diameter of a portion of the carrier 62. The one-way clutch 74 is designed such that when the turbine 18 attempts to rotate faster than the torque converter output shaft 70, the one-way clutch 74 prevents such overrunning. Thus the turbine 18 can directly drive the torque converter output shaft 70. This occurs most often when the torque converter clutch 32 is disengaged. During vehicle operation with the torque converter clutch 32 disengaged, all of the power of the engine crankshaft 44 is directed to the impeller 14. The impeller 14, in a well known manner, directs power to the turbine 18 which in turn delivers power through the one-way clutch 74 to the torque converter output shafts 70 and hence to the transmission.

## Claims

1. A torque converter and clutch assembly comprising a torque converter clutch (32) ; a turbine (18); an impeller (14) ; control means (30) for controlling the apply and release of the torque converter clutch for engaging the torque converter clutch with the impeller ; a torque converter output shaft (70) ; and a planetary gear arrangement (72) including an input gear (52) drivingly connected with the torque converter clutch, a reaction gear (60) drivingly connected with the turbine (18), an output member (62) drivingly connected with the torque converter output shaft (70), and pinion gears (56) meshing with the input gear and the reaction gear for drivingly interconnecting the turbine and torque converter clutch (32) at a drive ratio of the turbine to the torque converter clutch of less than 1 : 1 ; characterised by one-way drive means (74) disposed between the turbine and the torque converter output shaft for preventing the turbine from overrunning the torque converter output shaft.

2. A torque converter and clutch assembly as claimed in Claim 1, wherein the output member (62) rotatably supports the pinion gears (56), and wherein the one-way drive means (74) transmits power from the turbine (18) to the torque converter output shaft (70) when the torque converter clutch (32) is released.

3. A torque converter and clutch assembly as claimed in Claim 1 or Claim 2, wherein the input gear (52) and the reaction gear (60) define a pair of input gears ; and wherein the output member (62) defines carrier means for rotatably supporting the pinion gears (56).

## Revendications

1. Ensemble de convertisseur de couple et d'accouplement comprenant un accouplement de convertisseur de couple (32) ; une turbine (18) ; un rotor (14) ; des moyens de commande (30) pour commander l'application et la libération de l'accouplement de convertisseur de couple pour engager l'accouplement de convertisseur de couple avec le rotor ; un arbre de sortie de convertisseur de couple (70) ; un agencement d'engrenage planétaire (72) comprenant un pignon d'entrée (52) relié à l'accouplement de convertisseur de couple, un pignon de réaction (60) relié à la turbine (18), un élément de sortie (62) relié à l'arbre de sortie de convertisseur de couple (70), et des pignons (56) engrenant avec le pignon d'entrée et le pignon de réaction pour relier mutuellement la turbine et l'accouplement de convertisseur de couple (32) avec un rapport d'entraînement de la turbine à l'accouplement de convertisseur de couple inférieur à 1.1 ; caractérisé par un moyen d'entraînement unidirectionnel (74) disposé entre la turbine et l'arbre de sortie de convertisseur de couple pour empêcher la turbine de tourner plus vite que l'arbre de sortie de convertisseur de couple.

2. Ensemble de convertisseur de couple et d'accouplement selon la revendication 1, dans lequel l'élément de sortie (62) supporte à rotation les pignons (56), et dans lequel le moyen d'entraînement unidirectionnel (74) transmet de la puissance depuis la turbine (18) à l'arbre de sortie de convertisseur de couple (70) lorsque l'accouplement de convertisseur de couple (32) est libéré.

3. Ensemble de convertisseur de couple et d'accouplement selon la revendication 1 ou 2, dans lequel le pignon d'entrée (52) et le pignon de réaction (60) définissent une paire de pignons d'entrée ; et dans lequel l'élément de sortie (62) définit un moyen de support pour porter à rotation les pignons (56).

## Ansprüche

1. Drehmomentwandler- und Kupplungsanordnung mit einer Drehmomentwandler-Kupplung (32) ; einer Turbine (18) ; einem Flügelrad (14) ; Steuermittel (30) zum Steuern des Anlegens und Lösens der Drehmomentwandler-Kupplung zum Eingriff der Drehmomentwandler-Kupplung mit dem Flügelrad ; einer Drehmomentwandler-Ausgangswelle (70) und einer Planetengetriebeanordnung (72), die ein antriebsmäßig mit der Drehmomentwandler-Kupplung verbundenes Eingangszahnrad (52), ein antriebsmäßig mit der Turbine (18) verbundenes Reaktionszahnrad (60) und ein antriebsmäßig mit der Drehmomentwandler-Ausgangswelle (70) verbundenes Ausgangsglied (62) und Ritzelzahnräder (56) enthält, die mit dem Eingangszahnrad und dem Reaktionszahnrad kämmen zur antriebsmäßigen Verbindung der Turbine und der Drehmomentwandler-Kupplung (32) bei einem Antriebsverhältnis der Turbine zu der Drehmomentwandler-Kupplung von weniger als 1 : 1 ; gekennzeichnet durch ein zwischen der Turbine und der Drehmomentwandler-Ausgangswelle angeordnetes Einwege-Antriebsmittel (74), um zu verhindern, daß die Turbine die Drehmomentwandler-Ausgangswelle überläuft.

2. Drehmomentwandler- und Kupplungsanordnung nach Anspruch 1, bei der das Ausgangsglied (62) die Ritzelzahnräder (56) drehbar abstützt und bei der das Einwege-Antriebsmittel (74) Leistung von der Turbine (18) zu der Drehmomentwandler-Ausgangswelle (70) überträgt, wenn die Drehmomentwandler-Kupplung (32) gelöst ist.

3. Drehmomentwandler- und Kupplungsanordnung nach Anspruch 1 oder 2, bei der das Eingangszahnrad (52) und das Reaktionszahnrad (60) ein Eingangs-Zahnradpaar bestimmen und bei der das Ausgangsglied (62) Trägermittel zum drehbaren Abstützen der Ritzelzahnräder (56) bestimmt.

*Fig.1*

*Fig.2*